# EUROPÄISCHE PATENTSCHRIFT

(11) **EP 1 621 064 B1**
(45) Veröffentlichungstag und Bekanntmachung des Hinweises auf die Patenterteilung: **26.03.2008**
(21) Anmeldenummer: 05014740.4
(22) Anmeldetag: 07.07.2005
(51) Int. Cl.: A01D 61/00

(54) **Schrägförderer einer landwirtschaftlichen Erntemaschine**
Elevator conveyor for an agricultural machine
Conveyeur-élévateur pour une machine agricole

(30) Priorität: 26.07.2004 DE 102004036183
(43) Veröffentlichungstag der Anmeldung: 01.02.2006
(73) Patentinhaber: CLAAS Selbstfahrende Erntemaschinen GmbH, 33428 Harsewinkel (DE)
(72) Erfinder: Wernsmann, Thomas, 33428 Harsewinkel (DE); Büddefeld, Thomas, 34537 Bad Wildungen (DE)

(56) Entgegenhaltungen:
- EP-A- 0 448 844
- US-A- 2 858 012
- US-A- 4 362 005
- US-A1- 2003 015 405
- US-A1- 2004 112 025

## Beschreibung

Die Erfindungen betrifft einen Schrägförderer einer landwirtschaftlichen Erntemaschine gemäß dem Oberbegriff des Anspruchs 1.

Aus der US 2 696 290 ist ein Schrägförderer eines Mähdreschers bekannt geworden, bei dem eine in einem Gehäuse angeordnete Umlenkwelle an ihren äußeren Enden drehbar an zwei schwenkbaren Pendelarmen gelagert ist. Beide Pendelarme sind jeweils mit einer Spannspindel einer Förderkettenspanneinrichtung drehbar verbunden, mit denen das Zugmittel des Schrägförderers gespannt wird. Bei zunehmenden Erntegutstrom weicht die Umlenkwelle nach oben aus, indem die Pendelarme verschwenken.

Aus der EP 0 448 844 A1 ist ebenfalls ein Schrägförderer eines Mähdreschers bekannt geworden, bei dem eine in einem Gehäuse angeordnete Umlenkwelle an ihren äußeren Enden drehbar an zwei schwenkbaren Pendelarmen gelagert ist. Beide Pendelarme sind jeweils mit einer Spannspindel einer Förderkettenspanneinrichtung drehbar verbunden, mit denen das Zugmittel des Schrägförderers gespannt wird.

Nachteilig bei den bekannten Schrägförderern ist es, dass die Umlenkwelle jeweils nur mit ihrem Eigengewicht gegen den Erntegutstrom drückt und dieses Eigengewicht nicht ausreicht, um den Erntegutstrom zu verdichten und sicher in den rückwärtigen Bereich des Schrägförderers zu transportieren.

Der Erfindung liegt daher die Aufgabe zugrunde einen Schrägförderer zu schaffen, der die Nachteile des Standes der Technik vermeidet und bei dem die Umlenkwalze den Erntegutstrom verdichtet und zuverlässig in den rückwärtigen Bereich des Schrägförderers transportiert.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Indem die Spanneinrichtung auch ein Rückstellmoment erzeugt, das an der wenigstens einen Zugmittelführung angreift, wird auf konstruktiv einfache Weise sichergestellt, dass die Spanneinrichtung sowohl das Zugmittel spannt als auch die Zugmittelführung gegen das Erntegut drückt.

Die Zugmittelführung umfasst vorteilhafterweise eine Umlenkwelle und zumindest einen Pendelarm, wobei der Pendelarm schwenkbar gelagert ist, so dass die Umlenkwelle bei ansteigendem Erntegut nach oben ausweichen kann.

In vorteilhafter Weiterbildung der Erfindung drückt das Rückstellmoment die Zugmittelführung in einer unteren Position gegen einen unteren Anschlag, so dass das Zugmittel gespannt wird und gleichzeitig die Umlenkwelle mit einem Anpressdruck gegen die Erntegutschicht gedrückt wird.

Um das auf dem Boden des Gehäuses geförderte Erntegut zu verdichten, drückt das Rückstellmoment in vorteilhafter Weiterbildung der Erfindung die Zugmittelführung in einer oberen Position gegen das Erntegut, welches die Umlenkwelle anhebt.

Das Rückstellmoment nimmt vorteilhafterweise mit zunehmender vertikaler Ausrichtung des Pendelarms zu, um dem steigenden Erntegutstrom und der daraus resultierenden zunehmenden Kraft des Erntegutstromes auf die Umlenkwelle entgegen zu wirken.

Damit der Pendelarm sowohl verschwenkt als auch verschoben werden kann, weist der Schrägförderer in einer weiteren vorteilhaften Ausgestaltung der Erfindung ein Gehäuse mit Seitenwänden auf und der Pendelarm ist mit einem Führungszapfen versehen, der in einem Langloch in einer Seitenwand geführt wird.

In einer besonders vorteilhaften Ausführung des erfindungsgemäßen Schrägförderers ist der Pendelarm in einem oberhalb des Führungszapfens in einem Abstand vom Führungszapfen angeordneten Gelenkpunkt mit der Spanneinrichtung drehbar verbunden, so dass die Spanneinrichtung gleichzeitig das Zugmittel spannt und den Pendelarm nach unten drückt.

In vorteilhafter Weiterbildung der Erfindung ist die Spannvorrichtung wenigstens teilweise im Innern des Einzugsgehäuses angeordnet, um den Kraftverlauf zwischen dem Pendelarm und der Spanneinrichtung im Gelenkpunkt zu optimieren.

Vorteilhafterweise weist die Seitenwand im Bereich der Spanneinrichtung eine Öffnung auf, durch die die Spanneinrichtung eingestellt werden kann, so dass die Spanneinrichtung von Außen leicht zugänglich ist und eine verschleißbedingte Längung des Zugmittels leicht wahrnehmbar ist.

Um zu verhindern, dass das Zugmittel zu stark gespannt wird oder eine verschleißbedingte Lockerung des Spannelementes eintritt, ist in vorteilhafter Weiterbildung der Erfindung an der Öffnung eine Markierung angeordnet, die die Länge anzeigt, auf die die Druckfeder vorgespannt werden soll.

In einer weiteren vorteilhaften Ausgestaltung der Erfindung ist die Bewegung des Pendelarms durch einen oberen Anschlag begrenzt, um zu verhindern, dass die Windungen der Druckfeder sich berühren, wenn die Druckfeder durch den nach oben drehenden Pendelarm zusammengedrückt wird.

Indem der untere Anschlag des Pendelarms von Außen verstellbar ist, wodurch die untere Position der Umlenkwelle einstellbar ist, kann der kleinste mögliche Durchgangsquerschnitt zwischen der Umlenkwelle und dem Boden des Gehäuses festgelegt werden.

Weitere vorteilhafte Ausführungen sind Gegenstand weiterer Unteransprüche und werden an Hand eines in mehreren Figuren dargestellten Ausführungsbeispiels beschrieben.
Es zeigen:
- Fig.1: eine Seitenansicht eines selbstfahrenden Mähdreschers,
- Fig.2: eine perspektivische Ansicht des erfindungsgemäßen Schrägförderers.
- Fig.3: einen Ausschnitt der Seitenansicht eines erfindungsgemäßen Schrägförderers.

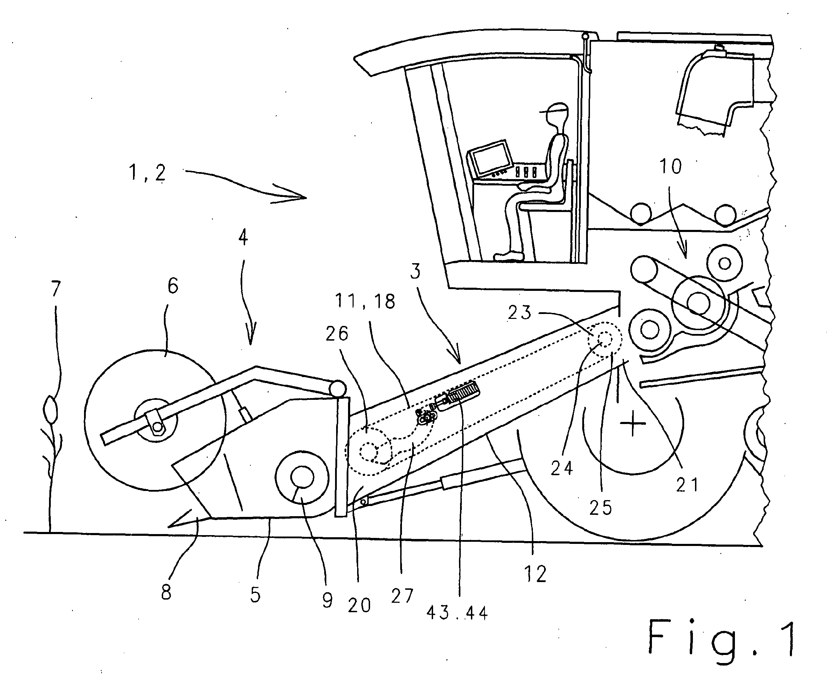

In Fig. 1 ist eine als selbstfahrender Mähdrescher 1 ausgeführte landwirtschaftliche Erntemaschine 2 in der Seitenansicht dargestellt, an deren Schrägförderer 3 ein Schneidwerk 4 angeordnet ist. Das Schneidwerk 4 besteht aus einem Schneidtisch 5 und einer diesem obenseitig zugeordneten rotierenden Haspel 6. Das Erntegut 7 wird von einem im vorderen Bereich des Schneidtischs 5 angebrachtem Mähbalken 8 abgeschnitten und mittels einer im Schneidtisch 5 angeordneten Einzugschnecke 9 an den nachgeordneten erfindungsgemäßen Schrägförderer 3 übergeben. Das Erntegut 7 wird von einem entgegen dem Uhrzeigersinn umlaufenden Zugmittel 11 des Schrägförderers 3 erfasst und unterschlächtig über einen Boden 12 des Schrägförderers 3 zu einer Dreschvorrichtung 10 weiterbefördert, welche das Erntegut 7 mechanisch bearbeitet. Im Austrittsbereich 21 des Schrägförderers 3 ist eine entgegen dem Uhrzeigersinn rotierend angetriebene Antriebswelle 24 drehbar gelagert, auf der Kettenräder 25 verdrehsicher befestigt sind.

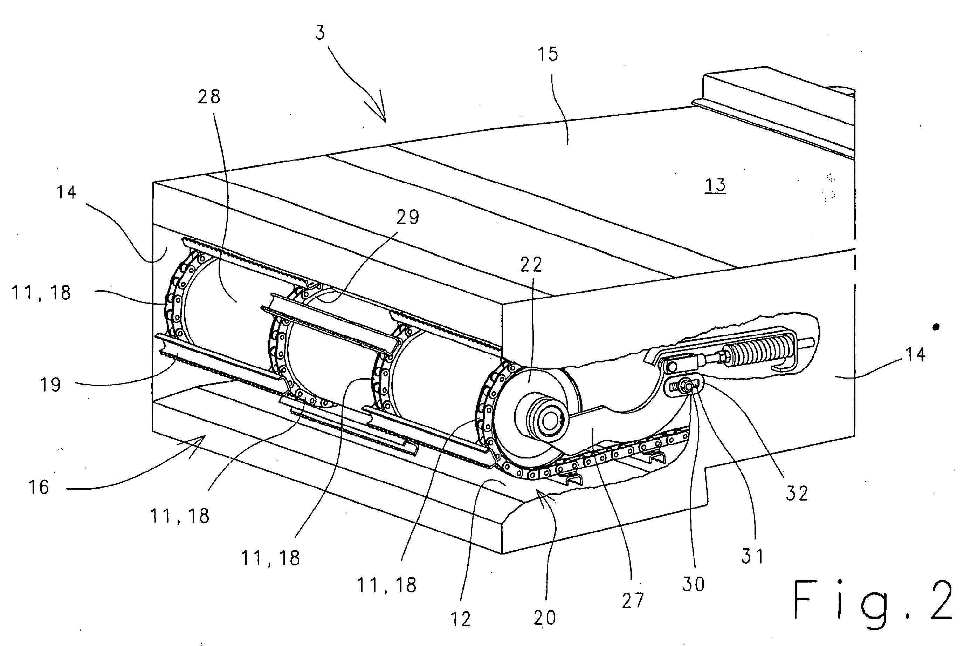

Fig.2 zeigt eine perspektivische Ansicht der erfindungsgemäßen Schrägförderers 3, dessen umlaufendes Zugmittel 11 von einem Gehäuse 13 ummantelt wird, wobei das Gehäuse 13 im Wesentlichen aus zwei Seitenwänden 14 sowie einem Deckel 15 und dem Boden 12 besteht. Innerhalb des Gehäuses 13 ist der von dem Zugmittel 11 gebildete Förderer 16 angeordnet, dessen Zugmittel 11 mehrere, parallel und gleichmäßig zueinander beabstandete Förderketten 18 aufweist, wobei die jeweils benachbarten Förderketten 18 über Förderleisten 19 miteinander verbunden sind. Die Förderketten 18 des Zugmittels 11 werden in einem Eintrittsbereich 20 des Gehäuses 13 mit einer ersten Zugmittelführung 22 und in einem Austrittsbereich 21 des Gehäuses 13 mit einer weiteren Zugmittelführung 23 umgelenkt. Anstelle der Förderketten 18 können beispielsweise auch ein Riemen oder ein Seile verwendet werden. Die im Austrittbereich 21 des Gehäuses angeordnete Zugmittelführung 22 besteht aus der in den Seitenwänden 14 gelagerten Antriebswelle 24. Jede Förderkette 18 des Zugmittels 11 umschlingt ein Kettenrad (siehe Fig.1) und greift dabei in die Verzahnung des Kettenrades ein, so dass sich eine formschlüssige Wirkverbindung ergibt. Die im Eintrittsbereich 20 des Gehäuses 13 angeordnete Zugmittelführung 23 besteht aus einer Umlenkwelle 26 und zwei an beiden äußeren Enden der Umlenkwelle 26 drehbar gelagerten, spiegelbildlich ausgeführten, schwenkbaren Pendelarmen 27. Die Umlenkwelle 26 weist eine Trommel 28 auf, auf deren Mantel in einem Abstand Flansche 29 angeordnet sind. Die Förderketten 18 des Zugmittels 11 liegen auf den Flanschen 29 auf und umschlingen diese. An jedem der Pendelarme 27 ist jeweils ein Führungszapfen 30 angeschweißt, der in einem Langloch 31 in der neben jedem Pendelarm 27 angeordneten Seitenwand 14 geführt wird. Beide Seitenwände 14 sind im Randbereich der Langlöcher 31 durch Verstärkungsbleche 32 verstärkt. In oberhalb der Führungszapfen 30 in Abständen 33 von den Führungszapfen 30 angeordneten Gelenkpunkten 34 sind beide Pendelarme 27 jeweils mit einer erfindungsgemäßen und noch näher zu beschreibenden Spanneinrichtung 35 drehbar verbunden. Im Bereich der Spanneinrichtungen 35 ist in den Seitenwänden 14 jeweils eine Öffnung 36 eingebracht, durch die die im Innern des Gehäuses 13 angeordneten Spanneinrichtungen 35 einstellbar sind.

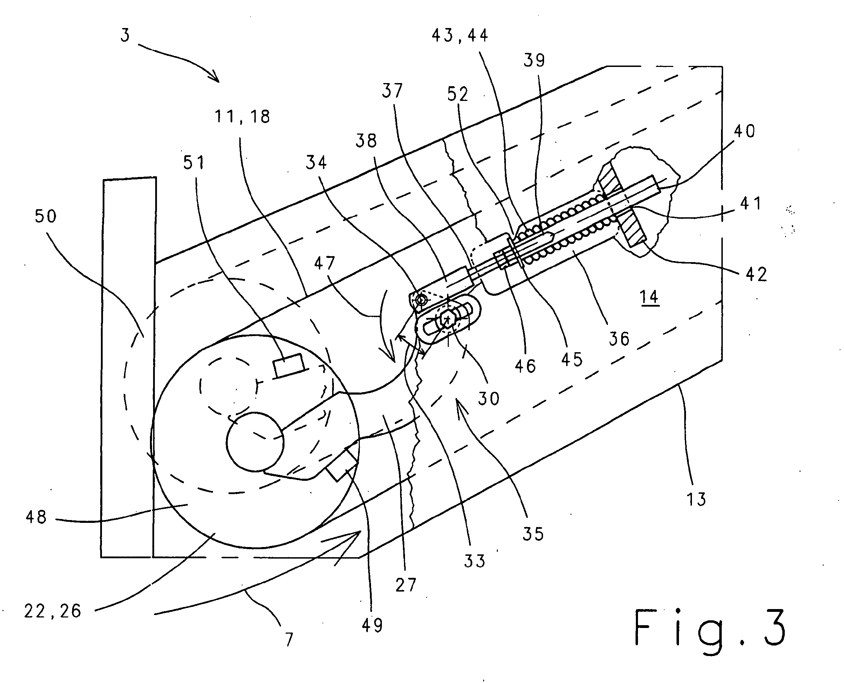

In Fig.3 ist ein vergrößerter Ausschnitt der Seitenansicht des Schrägförderers 3 mit einer Zugmittelführung 22 und einer erfindungsgemäßen Spannvorrichtung 35 dargestellt. Die nachfolgende Beschreibung gilt entsprechend für die dahinterliegenden und daher nicht sichtbaren, identischen oder spiegelbildlich ausgeführten Bauteile des Schrägförderers 3. Die Spannvorrichtung 35 besteht aus einer Gewindestange 37 die einends über einen Gelenkgabelkopf 38 mit dem Pendelarm 27 der Zugmittelführung 22 gelenkig verbunden ist und andernends in ein Gewindesackloch 39 eines Führungsbolzens 40 eingeschraubt ist. Der Führungsbolzen 40 ist verschieblich sowie verdrehbar in einer Durchgangsbohrung 41 eines Stegblechs 42 gelagert, das auf der Innenseite auf die Seitenwand 14 aufgeschweißt ist. Der Führungsbolzen 40 durchsetzt eine als Schraubenfeder 43 ausgeführte Druckfeder 44, wobei ein an dem Führungsbolzen 40 angeordneter Bund 45 die Druckfeder 44 gegen das Stegblech 42 vorspannt. Um den Führungsbolzen 40 gegen ein Herunterdrehen von der Gewindestange 37 zu sichern, werden die Gewindestange 37 und der Führungsbolzen 40 mit einer Kontermutter 46 gegeneinander verspannt.

Die erfindungsgemäße Spanneinrichtung 35 erzeugt mit der Federkraft der vorgespannten Druckfeder 44 neben der Zugmittelspannkraft ein Rückstellmoment 47 um den Führungszapfen 30. Das Rückstellmoment 47 greift an dem Pendelarm 27 an und drückt den Pendelarm 27 in einer unteren Position 48 gegen einen unteren Anschlag 49. Der auf der Innenseite des Seitenteils 14 angeordnete Anschlag 49 ist von Außen verdrehbar, wodurch die untere Position 48 der Umlenkwelle 26 einstellbar ist.

Das gegen die Umlenkwelle 26 drückende Erntegut 7 dreht den Pendelarm 27 im Uhrzeigersinn um den Führungszapfen 30 in eine obere Position 50, wodurch der Führungsbolzen 40 innerhalb der ihn führenden Durchgangsbohrung 41 in einen rückwärtigen Bereich des die Spanneinrichtung 35 aufnehmenden Stegblechs 42 bewegt wird. Dabei wird die Druckfeder 44 weiter zusammengedrückt und das von der Spanneinrichtung 35 erzeugte Rückstellmoment 47 um den Führungszapfen 30 steigt durch die zunehmende Federkraft an. Das an dem Pendelarm 27 angreifende Rückstellmoment 47 drückt die Umlenkwelle 26 gegen das Erntegut 7. Die Größe des Rückstellmomentes 47 ist einerseits abhängig von der Federkraft der Druckfeder 44, die proportional zum Federweg der Druckfeder 44 ist und andererseits abhängig von dem Abstand 33 zwischen dem Gelenkpunkt 34 und dem Führungsbolzen 30 des Pendelarmes 27.

Oberhalb des Pendelarms 27 ist ein oberer Anschlag 51 an der Innenseite der Seitenwand 14 des Gehäuses 13 starr befestigt, der den Schwenkbereich des Pendelarms 27 nach oben begrenzt.

Um das Zugmittel 11 immer mit der optimalen Spannung zu beaufschlagen, ist an der in der Seitenwand 14 eingelassenen Öffnung 36 eine Markierung 52 angebracht, die die Länge anzeigt, auf die die Druckfeder 44 vorgespannt sein soll. Im laufenden Betrieb längen sich die Förderketten 18 des Zugmittels 17 verschleißbedingt, wodurch die Zugmittelführung 22 mitsamt der Spannvorrichtung 35 in einen frontseitigen Bereich des Schrägförderers 3 wandert. Die Druckfeder 44 entspannt sich, da sich gleichzeitig der Abstand zwischen dem Bund 45 des Führungsbolzens 40 und dem Stegblech 42 vergrößert. Um die optimale Vorspannung der Druckfeder 44 wieder herzustellen, wird der Führungsbolzen 40 soweit von der Gewindestange 37 heruntergedreht, bis der Bund 45 wieder auf der Höhe der Markierung 52 steht.

Es liegt im Rahmen des Könnens eines Fachmannes das beschriebene Ausführungsbeispiel in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Mähdrescher
- 2: Landwirtschaftliche Erntemaschine
- 3: Schrägförderer
- 4: Schneidwerk
- 5: Schneidtisch
- 6: Haspel
- 7: Erntegut
- 8: Mähbalken
- 9: Einzugsschnecke
- 10: Dreschvorrichtung
- 11: Zugmittel
- 12: Boden
- 13: Gehäuse
- 14: Seitenwand
- 15: Deckel
- 16: Förderer
- 18: Förderkette
- 19: Förderleisten
- 20: Eintrittsbereich
- 21: Austrittsbereich
- 22: erste Zugmittelführung
- 23: weitere Zugmittelführung
- 24: Antriebswelle
- 25: Kettenrad
- 26: Umlenkwelle
- 27: Pendelarm
- 28: Trommel
- 29: Flansch
- 30: Führungsbolzen
- 31: Langloch
- 32: Verstärkungsblech
- 33: Abstand
- 34: Gelenkpunkt
- 35: Spanneinrichtung
- 36: Öffnung
- 37: Gewindestange
- 38: Gabelgelenkkopf
- 39: Gewindesackloch
- 40: Führungsbolzen
- 41: Durchgangsbohrung
- 42: Stegblech
- 43: Schraubenfeder
- 44: Druckfeder
- 45: Bund
- 46: Kontermutter
- 47: Rückstellmoment
- 48: untere Position
- 49: unterer Anschlag
- 50: obere Position
- 51: oberer Anschlag
- 52: Markierung

## Patentansprüche

1. Schrägförderer einer landwirtschaftlichen Erntemaschine (2) mit wenigstens einem endlosen Zugmittel (11), das über wenigstens eine Zugmittelführung (22, 23) umgelenkt und mit wenigstens einer Spanneinrichtung (35) gespannt wird, wobei die Zugmittelführung (22, 23) und die ihr zugeordnete Umlenkwelle (26) verschwenkbar ist,
**dadurch gekennzeichnet,**
**dass** die Spanneinrichtung (35) neben der Zugmittelspannkraft ein Rückstellmoment (47) erzeugt, das an der wenigstens einen Zugmittelführung (22, 23) angreift und die Umlenkwelle (26) gegen das Erntegut (7) presst

2. Schrägförderer einer landwirtschaftlichen Erntemaschine nach Anspruch 1,
**dadurch gekennzeichnet,**
**dass** die wenigstens eine Zugmittelführung (22, 23) eine Umlenkwelle (26) und zumindest einen Pendelarm (27) umfasst, wobei der Pendelarm (27) schwenkbar gelagert ist.

3. Schrägförderer einer landwirtschaftlichen Erntemaschine nach einem der vorhergehenden Ansprüche,
**dadurch gekennzeichnet,**
**dass** das Rückstellmoment (47) die Zugmittelführung (22, 23) in einer unteren Position (48) gegen einen unteren Anschlag (49) drückt.

4. Schrägförderer einer landwirtschaftlichen Erntemaschine nach einem der vorhergehenden Ansprüche,
**dadurch gekennzeichnet,**
**dass** das Rückstellmoment (47) die Zugmittelführung (22, 23) in einer oberen Position (50) gegen das Erntegut (7) drückt, welches die Umlenkwelle (26) anhebt.

5. Schrägförderer einer landwirtschaftlichen Erntemaschine nach einem der vorhergehenden Ansprüche,
**dadurch gekennzeichnet,**
**dass** das Rückstellmoment (47) mit zunehmender vertikaler Ausrichtung des Pendelarms (27) zunimmt.

6. Schrägförderer einer landwirtschaftlichen Erntemaschine nach einem der vorhergehenden Ansprüche,
**dadurch gekennzeichnet,**
**dass** der Schrägförderer (3) ein Gehäuse (13) mit Seitenwänden (14) aufweist und der Pendelarm (27) mit einem Führungszapfen (30) versehen ist, der in einem Langloch (31) in einer Seitenwand (14) geführt wird.

7. Schrägförderer einer landwirtschaftlichen Erntemaschine nach einem der vorhergehenden Ansprüche,
**dadurch gekennzeichnet,**
**dass** der Pendelarm (27) in einem oberhalb des Führungszapfens (30) in einem Abstand (33) vom Führungszapfen (30) angeordneten Gelenkpunkt (34) mit der Spanneinrichtung (35) drehbar verbunden ist.

8. Schrägförderer einer landwirtschaftlichen Erntemaschine nach einem der vorhergehenden Ansprüche,
**dadurch gekennzeichnet,**
**dass** die Spanneinrichtung (35) wenigstens teilweise im Innern des Gehäuses (13) angeordnet ist.

9. Schrägförderer einer landwirtschaftlichen Erntemaschine nach einem der vorhergehenden Ansprüche,
**dadurch gekennzeichnet,**
**dass** die Seitenwand (14) im Bereich der Spanneinrichtung (35) eine Öffnung (36) aufweist, durch die die Spanneinrichtung (35) einstellbar ist.

10. Schrägförderer einer landwirtschaftlichen Erntemaschine nach einem der vorhergehenden Ansprüche,
**dadurch gekennzeichnet,**
**dass** an der Öffnung (36) eine Markierung (52) angeordnet ist, die die Länge anzeigt, auf die die Druckfeder (44) vorgespannt sein soll.

11. Schrägförderer einer landwirtschaftlichen Erntemaschine nach einem der vorhergehenden Ansprüche,
**dadurch gekennzeichnet,**
**dass** die Bewegung des Pendelarms (27) durch wenigstens einen oberen Anschlag (51) begrenzt ist.

12. Schrägförderer einer landwirtschaftlichen Erntemaschine nach einem der vorhergehenden Ansprüche,
**dadurch gekennzeichnet,**
**dass** der untere Anschlag (49) des Pendelarms (27) von Außen verstellbar ist, wodurch die untere Position (48) der Umlenkwelle (26) einstellbar ist.

## Claims

1. An inclined conveyor of an agricultural harvester (2) comprising at least one endless pulling means (11) which is deflected over at least one pulling means guide (22, 23) and is tensioned with at least one tensioning device (35), wherein the pulling means guide (22, 23) and the deflection shaft (26) associated therewith is pivotable,
**characterised in that**
the tensioning device (35) besides the pulling means tensioning force produces a return moment (47) which engages the at least one pulling means guide (22, 23) and presses the deflection shaft (26) against the crop material (7).

2. An inclined conveyor of an agricultural harvester according to claim 1 **characterised in that** the at least one pulling means guide (22, 23) includes a deflection shaft (26) and at least one swing arm (27), the swing arm (27) being supported pivotably.

3. An inclined conveyor of an agricultural harvester according to one of the preceding claims **characterised in that** the return moment (47) urges the pulling means guide (22, 23) against a lower abutment (49) in a lower position (48).

4. An inclined conveyor of an agricultural harvester according to one of the preceding claims **characterised in that** the return moment (47) urges the pulling means guide (22, 23) in an upper position (50) against the crop material (7) which lifts the deflection shaft (26).

5. An inclined conveyor of an agricultural harvester according to one of the preceding claims **characterised in that** the return moment (47) increases with increasing vertical orientation of the swing arm (27).

6. An inclined conveyor of an agricultural harvester according to one of the preceding claims **characterised in that** the inclined conveyor (3) has a housing (13) with side walls (14) and the swing arm (27) is provided with a guide projection (30) which is guided in a slot (31) in a side wall (14).

7. An inclined conveyor of an agricultural harvester according to one of the preceding claims **characterised in that** the swing arm (27) is rotatably connected to the tensioning device (35) at a pivot point (34) arranged above the guide projection (30) at a spacing (33) from the guide projection (30).

8. An inclined conveyor of an agricultural harvester according to one of the preceding claims **characterised in that** the tensioning device (35) is arranged at least partially in the interior of the housing (13).

9. An inclined conveyor of an agricultural harvester according to one of the preceding claims **characterised in that** the side wall (14) in the region of the tensioning device (35) has an opening (36) through which the tensioning device (35) is adjustable.

10. An inclined conveyor of an agricultural harvester according to one of the preceding claims **characterised in that** arranged at the opening (36) is a marking (52) indicating the length to which the compression spring (44) is to be prestressed.

11. An inclined conveyor of an agricultural harvester according to one of the preceding claims **characterised in that** the movement of the swing arm (27) is limited by at least one upper abutment (51).

12. An inclined conveyor of an agricultural harvester according to one of the preceding claims **characterised in that** the lower abutment (49) of the swing arm (27) is adjustable from outside, whereby the lower position (48) of the deflection shaft (26) is adjustable.

## Revendications

1. Convoyeur incliné d'une machine agricole de récolte (2) avec au moins un moyen de traction (11) sans fin qui est renvoyé par au moins un guide de moyen de traction (22, 23) et tendu par au moins un dispositif tendeur (35), le guide de moyen de traction (22, 23) et l'arbre de renvoi (26) qui lui est associé étant pivotants, **caractérisé en ce que** le dispositif tendeur (35) génère, en plus de la force de tension du moyen de traction, un moment de rappel (47) qui agit sur ledit au moins un guide de moyen de traction (22, 23) et presse l'arbre de renvoi (26) contre le produit récolté (7).

2. Convoyeur incliné d'une machine agricole de récolte selon la revendication 1, **caractérisé en ce que** ledit au moins un guide de moyen de traction (22, 23) comprend un arbre de renvoi (26) et au moins un bras oscillant (27), le bras oscillant (27) étant monté pivotant.

3. Convoyeur incliné d'une machine agricole de récolte selon l'une des revendications précédentes, **caractérisé en ce que** le moment de rappel (47) presse le guide de moyen de traction (22, 23), dans une position inférieure (48), contre une butée inférieure (49).

4. Convoyeur incliné d'une machine agricole de récolte selon l'une des revendications précédentes, **caractérisé en ce que** le moment de rappel (47) presse le guide de moyen de traction (22, 23), dans une position supérieure (50), contre le produit récolté (7) qui soulève l'arbre de renvoi (26).

5. Convoyeur incliné d'une machine agricole de récolte selon l'une des revendications précédentes, **caractérisé en ce que** le moment de rappel (47) croît augmente à mesure que l'orientation du bras oscillant (27) se rapproche de la verticale.

6. Convoyeur incliné d'une machine agricole de récolte selon l'une des revendications précédentes, **caractérisé en ce que** le convoyeur incliné (3) comporte un carter (13) avec des parois latérales (14) et le bras oscillant (27) est pourvu d'un tourillon de guidage (30) qui est guidé dans un trou oblong (31) dans une paroi latérale (14).

7. Convoyeur incliné d'une machine agricole de récolte selon l'une des revendications précédentes, **caractérisé en ce que** le bras oscillant (27) est relié à rotation au dispositif tendeur (35) en un point d'articulation (34) situé au-dessus du tourillon de guidage (30) à une distance (33) du tourillon de guidage.

8. Convoyeur incliné d'une machine agricole de récolte selon l'une des revendications précédentes, **caractérisé en ce que** le dispositif tendeur (35) est disposé au moins en partie à l'intérieur du carter (13).

9. Convoyeur incliné d'une machine agricole de récolte selon l'une des revendications précédentes, **caractérisé en ce que** la paroi latérale (14) comporte dans la région du dispositif tendeur (35) une ouverture (36) à travers laquelle le dispositif tendeur peut être réglé.

10. Convoyeur incliné d'une machine agricole de récolte selon l'une des revendications précédentes, **caractérisé en ce qu'**un repère (52) qui indique la longueur à laquelle le ressort de compression (44) doit être précontraint est disposé sur l'ouverture (36).

11. Convoyeur incliné d'une machine agricole de récolte selon l'une des revendications précédentes, **caractérisé en ce que** le mouvement du bras oscillant (27) est limité par au moins une butée supérieure (51).

12. Convoyeur incliné d'une machine agricole de récolte selon l'une des revendications précédentes, **caractérisé en ce que** la butée inférieure (49) du bras oscillant (27) est réglable de l'extérieur, ce qui permet de régler la position inférieure (48) de l'arbre de renvoi (26).
